# EUROPÄISCHE PATENTSCHRIFT

(11) **EP 0 421 263 B1**
(45) Veröffentlichungstag und Bekanntmachung des Hinweises auf die Patenterteilung: **10.02.1993**
(21) Anmeldenummer: 90118524.9
(22) Anmeldetag: 27.09.1990
(51) Int. Cl.: F01M 3/02, F02B 53/08, F01C 21/04

(54) **Schmierölsteueranordnung für Rotationskolbenmotor**
Lubrication control system for rotary piston engine
Système de commande de la lubrification d'un moteur à piston rotatif

(30) Priorität: 02.10.1989 US 415513
(43) Veröffentlichungstag der Anmeldung: 10.04.1991
(73) Patentinhaber: Rotary Power International, Inc., Wood-Ridge, New Jersey 07075 (US)
(72) Erfinder: Bartel, John Brian, Greenwood Lake, New York 10925 (US); Vatsky, Arthur, Teaneck, New Jersey 07666 (US); Drewniany, Edward Frank, Oradell, New Jersey 07649 (US)
(74) Vertreter: Gritschneder, Martin, Dipl.-Phys.

(56) Entgegenhaltungen:
- US-A- 3 727 399
- US-A- 4 388 901
- US-A- 4 774 918

## Beschreibung

Die Erfindung betrifft eine Schmierölsteueranordnung zur Zuführung von Schmieröl in den Arbeitsraum wenigstens eines Rotationskolbenmotors.

Die Schmierölsteuerung dient insbesondere für die Schmierung einer Dichtleiste, die auch Apex-Dichtung genannt wird, eines turbogeladenen Rotationsmotors mit Schichtladung, welcher einen ungedrosselten Lufteinlaß aufweist.

Für einen Rotationsmotor wurden verschiedenartige Systeme zur Steuerung des Schmierölstromes als Funktion der Motorbelastung und Drehzahl vorgeschlagen. Ein derartiges System ist in der US-PS 4,765,291 beschrieben, demzufolge die Ölabgabe einer Dosierpumpe auf die Bewegung einer Membran anspricht, welche dem Auspuffgasdruck ausgesetzt ist. Jedoch müssen bei diesem System eine Reihe von Teilen so ausgelegt werden, daß sie der hohen Auspufftemperatur standhalten. ferner kann der Auspuffgasdruck in Abhängigkeit von Modell und Zustand der Schalldämpfer und Auspuffanlage und in Abhängigkeit davon, ob im Auspuffsystem eine Undichtigkeit vorliegt, unterschiedliche Werte einnehmen. Daher arbeitet ein Schmieröldosiersystem, bei dem die Schmierölmenge als Funktion des Auspuffgasdruckes eingestellt wird, nicht immer zuverlässig.

Durch die US-A-4,388,901 ist ein Schmierölversorgungssystem für eine Rotationskolbenmaschine mit Turboladung bekannt geworden. Hierbei wird die Ansaugluft durch ein Gebläse verdichtet und gelangt über einen Einlaßkanal, in dem eine Drosselklappe angeordnet ist, in den Arbeitsraum.

Das Schmierölversorgungssystem enthält einen Ölkanal, der über Ölabgabedüsen einerseits stromabwärts der Drosselklappe in den Einlaßkanal und andererseits in das Rotorgehäuse mündet. Mit ihrem jeweils einen Ende stehen Luftkanäle mit den Ölabgabedüsen in Verbindung. Das andere Ende der Luftkanäle mündet in einem Bereich des Einlaßkanals zwischen Gebläse und Drosselklappe. Durch diese Maßnahme soll vermieden werden, daß zuviel Schmieröl bei geringer Maschinenleistung in den Arbeitsraum gefördert wird.

Andere Systeme, wie sie in den US-PS 3,788,782, US-PS 3,827,836 und US-PS 3,834,843 beschrieben sind, steuern die Schmierölabgabe in Abhängigkeit von wenigstens der Motordrehzahl und Vergaserdrosselklappenöffnung. Diese Methode ist jedoch bei Rotationsmotoren mit Kraftstoffeinspritzung und Schichtladung nicht anwendbar, da diese keine Drosselklappe aufweisen.

Die mit der Erfindung zu lösende Aufgabe wird darin gesehen, eine Schmierölsteueranordnung der eingangs genannten Art bereitzustellen, die für einen Rotationsmotor ohne Drosselklappe verwendbar ist und bei der die eingangs genannten Probleme vermeidbar sind. Insbesondere soll die Steuerung der Schmierölzuführung unabhängig vom Auspuffgasdruck und der hohen Auspuffgastemperatur arbeiten. Die Schmierölsteueranordnung soll ferner auf eine mehrere Rotationsmotoreneinheiten umfassende Maschine mit Turboladern anwendbar sein.

Die Aufgabe wird erfindungsgemäß durch die Merkmale des Patentanspruches 1 gelößt.

Vorzugsweise enthält das pneumatische Betätigungsglied ein Gehäuse, in dem sich ein auf Druck reagierendes Teil, zweckmäßigerweise eine Membran, befindet, welches eine Druckkammer abgrenzt. Auf die Membran wirkt der Druck der durch den Turbolader vorverdichteten Luft. Dieser Druck ist abhängig von der Drehzahl des Turboladers und des Motors.

Die Membran wird vorzugsweise durch eine Feder in Ihre Ruhelage vorgespannt. Sie steht über ein Verbindungsglied mit einem Steuerelement zur Beeinflussung der Öldosierpumpe derart in Verbindung, daß mit steigendem Luftdruck in dem Turboladeraustritt, der durch eine Erhöhung der Maschinenbelastung hervorgerufen wird, die Membran das Verbindungsglied und das Steuerelement so bewegt, daß die Öldosierpumpe zur Abgabe einer erhöhten Ölmenge veranlaßt wird.

Als Verbindungsglied dient vorzugsweise eine Stange mit wenigstens einem Gewindeende, welches eine Hülse aufnimmt, die beidseits durch eine Mutter gesicherte ist. Durch Verstellen der Muttern läßt sich die Lage der Hülse längs des Gewindeendes einstellen. Die Hülse ist mit dem Steuerelement der Öldosierpumpe verbunden. Dies erlaubt die Einstellung eines Arbeitspunktes der Schmierölsteueranordnung.

Einer bevorzugten Weiterbildung der Erfindung zufolge sind mehrere Rotationskolbenmotoren mit jeweils zugehörigen Turboladern zu einer Motoreinheit zusammengefaßt. Von jedem Austritt jedes der Turbolader führt eine Fühlleitung zu einer pneumatischen Einheit. Die Fühlleitungen mündet in Eintrittskanäle der pneumatischen Einheit. In der pneumatischen Einheit sind die Eintrittskanäle zu einem gemeinsamen Austrittskanal verbunden, der seinerseits mit dem pneumatischen Betätigungsglied in Verbindung steht.

Vorzugsweise stellt die pneumatische Einheit ein ODER-Gatter dar, so daß dann, wenn wenigstens einer der Turbolader Druck erzeugt, dieser Druck herangezogen wird, um die Öldosierpumpe zu steuern.

Weitere vorteilhafte Ausgestaltungen und Weiterbildungen der Erfindung gehen aus den Unteransprüchen hervor.

Anhand der Zeichnung, die zwei Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
Fig. 1 eine vereinfachte, schematische Darstellung eines Schmieröldosiersteuersystems für einen Rotationskolbenmotor gemäß vorliegender Erfindung,
Fig. 2 die detaillierte Darstellung eines Ausschnittes aus Fig. 1 mit der Verbindung zwischen der Membran und dem Einstellhebel für die Öldosierpumpe und
Fig. 3 eine vereinfachte, schematische Darstellung einer alternativen Ausgestaltung der Erfindung.

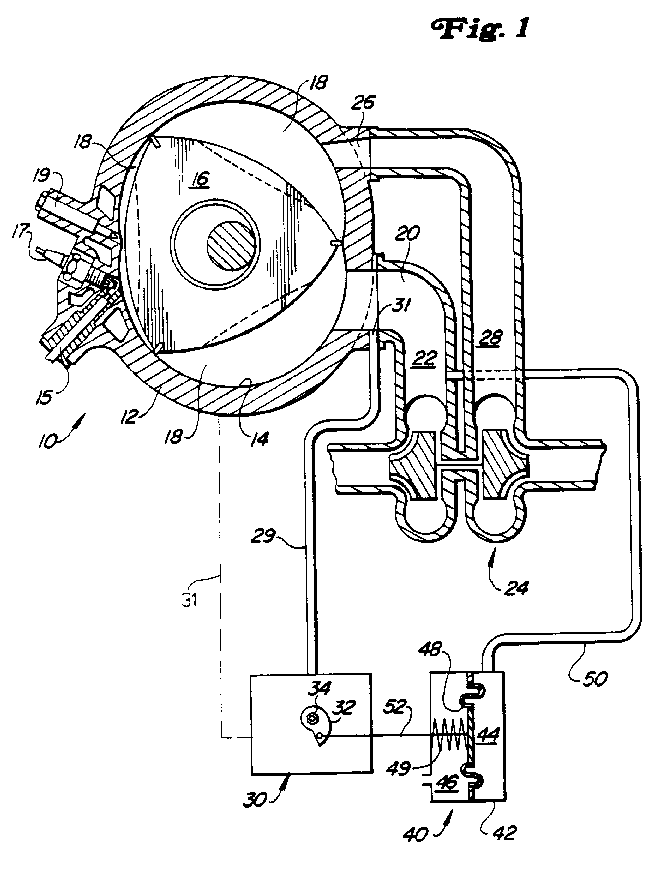

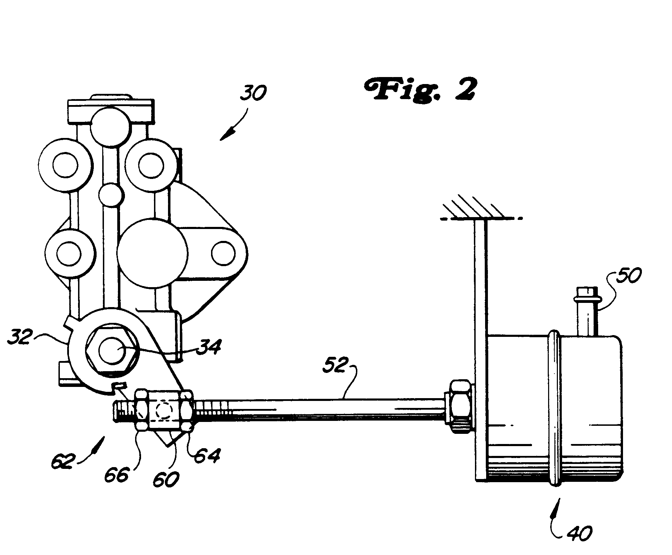

Gemäß der Figuren 1 und 2 weist eine Rotationskolbenmaschine 10 ein Gehäuse 12 auf, in das ein Hohlraum 14 eingelassen ist, welcher seinerseits einen Rotor 16 aufnimmt. Durch den Rotor 16 wird der Hohlraum 14 in mehrere Arbeitsräume 18 (Verbrennungsräume) unterteilt. Durch einen ungedrosselten Einlaßkanal 20 wird Luft von einem Austritt 22 eines Turboladers 24 zum Motor 10 geleitet. Über einen Auspuffkanal 26 wird Abgas von dem Motor 10 zu einem Eintritt 28 des Turboladers 24 geleitet.

Im Bereich des äußersten Totpunktes des Motors 10 befindet sich eine Kraftstoffeinspritzung mit Schichtladung sowie ein Zündsystem, welches einen Pilotkraftstoffeinspritzer 15, eine Zündquelle 17, beispielsweise eine Zündkerze, und einen Haupteinspritzer 19 enthält, wie in U.S. Patent No. 4,091,789 beschrieben.

Eine durch den Motor angetriebene (siehe Linie 31) Öldosierpumpe 30, beispielsweise eine Ölpumpe gemäß Modell No. 3Y2m-119 der Fa. Mikuni American Corporation, liefert Schmieröl durch die Leitung 29 an eine Tropfölschmierungsausflußöffnung 31, die sich in dem Einlaßkanal 20 befindet. Die Schmierölfördermenge wird durch einen Einstellhebel 32, der sich um einen Drehpunkt verdrehen läßt, gesteuert. Eine nicht dargestellte Torsionsfeder spannt den Einstellhebel 32 entgegen dem Uhrzeigersinn vor. Die Schmierölfördermenge ist ferner wegen des Motorantriebs von der Motordrehzahl abhängig, so daß mit steigender Motordrehzahl die Schmierölfördermenge zunimmt.

Ein pneumatisches Betätigungsglied 40 enthält ein Gehäuse 42, welches durch eine bewegliche Membran 48 in zwei Kammern 44 und 46 unterteilt ist. Durch den Kanal 50 wird der erhöhte Druck am Austritt 22 des Turboladers 24 der Kammer 44 mitgeteilt. Durch eine Stange 52 oder ein sonstiges Glied ist die Membran 48 mit dem Einstellhebel 32 derart verbunden, daß bei einer Erhöhung der Motorbelastung und des durch den Turbolader 24 erhöhten Druckes die Membran 48 und die Stange 52 nach links bewegt werden, wodurch der Einstellhebel 32 verdreht und die der Ausflußöffnung 31 zugeführte Schmierölmenge erhöht wird. Eine Feder 49 ist derart vorgespannt, daß sie die Membran 48 von dem Einstellhebel 32 wegdrückt. Es soll hervorgehoben werden, daß das Ausführungsbeispiel gemäß Fig. 1 auf den Fall eines Rotationskolbenmotors mit mehreren Rotoren und lediglich einem Turboladersystem anwendbar ist.

Gemäß Fig. 2 ist der Einstellhebel 32 drehbar mit einem Element oder einer Hülse 60 verbunden, welche von einem zwischen zwei Muttern 64 und 66 liegenden Gewindebereich 62 der Stange 52 aufgenommen wird.

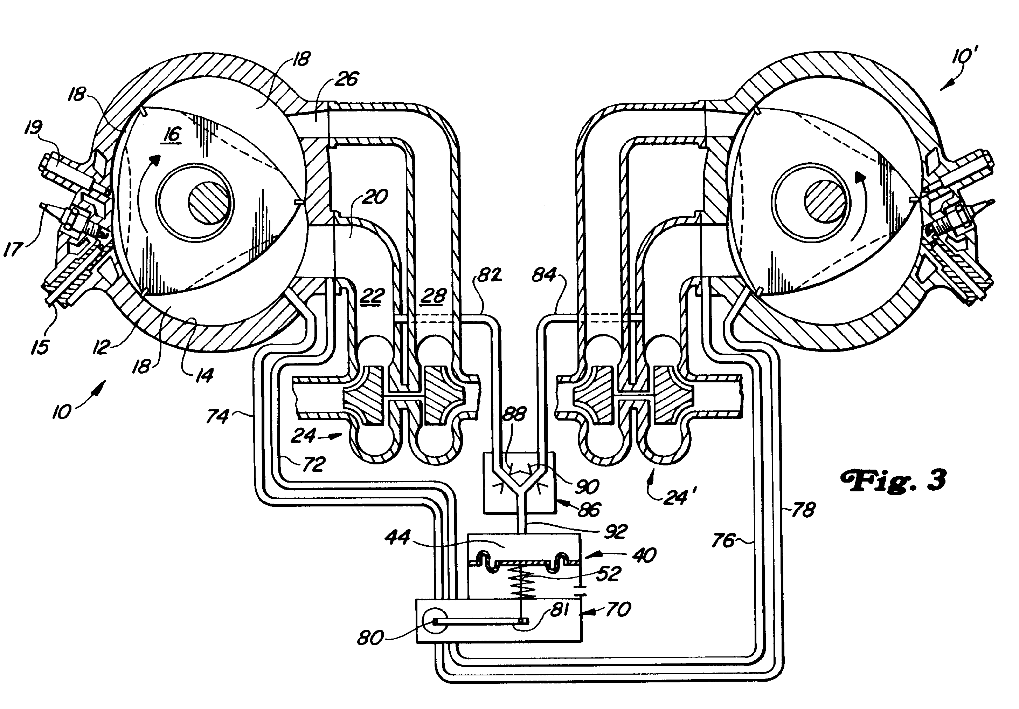

Aus Fig. 3 geht eine Anordnung hervor, die mehrere Motoreinheiten 10, 10′ enthält, denen je ein separater Turbolader 24, 24′ zugeordnet ist. Ein motorangetriebener Ölgeber 70, wie er beispielsweise durch das kommerziell verfügbare Steuerelement der "PG"-Lokomotivölgeber-Serie der Fa. Woodward Governor Co. gegeben ist, liefert Schmieröl über die Leitungen 72, 74, 76 und 78 an jeweils zwei Stellen jeder Motoreinheit 10, 10′. Die Schmieröldurchflußmenge wird durch die Drehlage einer Einstellhülse 80 eingestellt.

Die Stange 52 des pneumatischen Betätigungsgliedes 40 ist gelenkig mit dem Arm 81 verbunden, welcher drehfest mit der Einstellhülse 80 in Verbindung steht. Durch die Kanäle 82 und 84 wird turboaufgeladener Druck des Austritts 22 jedes der Turbolader 24, 24′ einer pneumatischen Einrichtung 86 mitgeteilt, welche ein pneumatisches Analogon zu einem elektronischen ODER-Kreis darstellt. Innerhalb der pneumatischen Einrichtung 86 werden die Kanäle 82, 84 durch je eine Beschränkungsstelle 88, 90 geführt und dann zu einem gemeinsamen Kanal 92 verbunden, welcher zu dem Eingang des pneumatischen Betätigungsgliedes 40 führt. Auf diese Weise werden die phasenverschobenen, zyklischen, zeitveränderlichen Drücke der getrennten Turbolader 24, 24′ zu einem im wesentlichen nichtzyklischen Druck zusammengefaßt, der sich in Abhängigkeit der Motorbelastung ändert. Wenn einer der beiden Turbolader nicht mehr arbeitet, wird weiterhin ein leicht verminderter, jedoch immer noch im wesentlichen nichtzyklischer Druck von dem anderen Turbolader der Kammer 44 des Betätigungsgliedes 40 mitgeteilt.

Auch wenn die Erfindung lediglich an Hand zweier Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen. Beispielsweise kann die Öldosierpumpe durch ein nicht dargestelltes Öldosierventil ersetzt werden, welches unter Druck stehendes Schmieröl von einer separaten, nicht gezeigten Pumpe erhält und welches die an den Motor gelieferte Schmierölmenge als Funktion der Motordrehzahl und wenigstens einer weiteren Ausgangsgröße steuert. In diesem Fall kann die lineare Bewegung der Stange 52 in eine Rotationsbewegung oder eine andere gewünschte Bewegung, wie sie von dem Eingang solch eines Öldosierventiles gefordert wird, übertragen werden.

## Patentansprüche

1. Schmierölsteueranordnung zur Zuführung von Schmieröl in den Arbeitsraum (18) mindestens eines Rotationskolbenmotors (10), welcher einen Einlaßkanal (20) ohne Drosselklappe für die Versorgung des Arbeitsraumes (18) mit Ansaugluft, einen Auslaßkanal (26) für die Abführung der Auspuffgase aus dem Arbeitsraum (18) und einen durch die Auspuffgase angetriebenen Turbolader (14) enthält, der über einen Austritt (22) vorverdichtete Luft an den Einlaßkanal (20) liefert, mit einer Ölzufuhrvorrichtung (30), die durch ein pneumatisches Betätigungsglied (40) gesteuert wird, wobei das pneumatische Betätigungsglied (40) mit dem Austritt (22) des Turboladers (24) in Verbindung steht und durch den Druck der vorverdichteten Luft so gesteuert wird, daß mit steigendem Ladeluftdruck die Schmierölabgabe an den Arbeitsraum (18) steigt.

2. Schmierölsteueranordnung nach Anspruch 1, dadurch gekennzeichnet, daß das pneumatische Betätigungsglied (40) ein Gehäuse (42) enthält, in dem sich ein auf Druck reagierendes Teil (48) befindet, welches eine Druckkammer (44) abgrenzt.

3. Schmierölsteueranordnung nach Anspruch 2, dadurch gekennzeichnet, daß zwischen dem Austritt (22) des Turboladers (24) und der Druckkammer (44) des pneumatischen Betätigungsgliedes (40) eine Verbindungsleitung (50) vorgesehen ist.

4. Schmierölsteueranordnung nach Anspruch 2 oder 3, dadurch gekennzeichnet, daß das auf Druck reagierende Teil (48) mit einem Federelement (49) in Verbindung steht, welches dem Druck in der Druckkammer (44) entgegenwirkt.

5. Schmierölsteueranordnung nach einem der Ansprüche 2 bis 4, dadurch gekennzeichnet, daß durch ein Verbindungsglied (52) das auf Druck reagierende Teil (48) mit einem Steuerelement (32) der Ölzufuhreinrichtung, insbesondere einer Öldosierpumpe (30), verbunden ist.

6. Schmierölsteueranordnung nach Anspruch 5, dadurch gekennzeichnet, daß das Verbindungsglied (52) Verstellmittel zur Einstellung der Kupplung zwischen dem Verbindungsglied (52) und dem Steuerelement (32) enthält.

7. Schmierölsteueranordnung nach Anspruch 5 oder 6, dadurch gekennzeichnet, daß das Verbindungsglied eine Stange (52) mit einem Gewindeende (62) enthält, welches eine beidseits durch je eine Mutter (64, 66) gesicherte Hülse (60) aufnimmt, und daß die Hülse (60) mit dem Steuerelement (32) der Öldosierpumpe (30) verbunden ist.

8. Schmierölsteueranordnung nach einem der Ansprüche 2 bis 7, dadurch gekennzeichnet, daß das auf Druck reagierende Teil eine Membran (48) ist.

9. Schmierölsteueranordnung nach einem der Ansprüche 1 bis 8, dadurch gekennzeichnet, daß mehrere Rotationskolbenmotoren (10, 10′) mit jeweils zugehörigen Turboladern (24, 24′) zu einer Motoreinheit zusammengefast sind, wobei von jedem Austritt (22) jedes der Turbolader (24, 24′) eine Fühlleitung (82, 84) zu einer pneumatischen Einheit (86) führt, daß die Fühlleitungen (82, 84) in Eintrittskanäle der pneumatischen Einheit (86) münden und daß die pneumatische Einheit (86) einen Austrittskanal aufweist, der mit dem pneumatischen Betätigungsglied (40) in Verbindung steht.

10. Schmierölsteueranordnung nach Anspruch 9, dadurch gekennzeichnet, daß die pneumatische Einheit (86) ein pneumatisches ODER-Gatter darstellt, bei dem die Eintrittskanäle innerhalb der pneumatischen Einheit (86) zu einem gemeinsamen Austrittskanal verbunden sind, und daß in jedem Eintrittskanal der pneumatischen Einheit (86) eine Beschränkungsstelle (88, 90) enthalten ist.

## Claims

1. Lubrication oil control arrangement for feeding lubrication oil into the working space (18) of at least one rotary piston engine (10) which contains an inlet channel (20) without restrictor valve for supplying the working space (18) with intake air, an outlet channel (26) for leading off the exhaust gases out of the working space (18), and a turbocharger (24) which is driven by the exhaust gases and supplies precompressed air to the inlet channel (20) via an outlet (22); having an oil feed device (30) which is controlled by a pneumatic actuation element (40), the pneumatic actuation element (40) being connected to the outlet (22) of the turbocharger (24) and being controlled by the pressure of the precompressed air in such a way that the delivery of lubrication oil to the working space (18) rises with rising charging air pressure.

2. Lubrication oil control arrangement according to Claim 1, characterised in that the pneumatic actuation element (40) contains a housing (42) in which there is a part (48) which reacts to pressure and bounds a pressure chamber (44).

3. Lubrication oil control arrangement according to Claim 2, characterised in that a connecting line (50) is provided between the outlet (22) of the turbocharger (24) and the pressure chamber (44) of the pneumatic actuation element (40).

4. Lubrication oil control arrangement according to Claim 2 or 3, characterised in that the part (48) which reacts to pressure is connected to a spring element (49) which counteracts the pressure in the pressure chamber (44).

5. Lubrication oil control arrangement according to one of Claims 2 to 4, characterised in that the part (48) which reacts to pressure is connected to a control element (32) of the oil feed device, in particular an oil metering pump (30), by means of a connecting element (52).

6. Lubrication oil control arrangement according to Claim 5, characterised in that the connecting element (52) contains adjustment means for adjusting the coupling between the connecting element (52) and the control element (32).

7. Lubrication oil control arrangement according to Claim 5 or 6, characterised in that the connecting element contains a rod (52), with a threaded end (62), which receives a sheath (60) which is secured on both sides by means of one nut (64, 66) in each case;and that the sheath (60) is connected to the control element (32) of the oil metering pump (30).

8. Lubrication oil control arrangement according to one of Claims 2 to 7, characterised in that the part which reacts to pressure is a diaphragm (48).

9. Lubrication oil control arrangement according to one of Claims 1 to 8, characterised in that a plurality of rotary piston engines (10, 10′) are combined with respectively associated turbochargers (24, 24′) to form an engine unit, a sensing line (82, 84) leading from each outlet (22) of each of the turbochargers (24, 24′) to a pneumatic unit (86); in that the sensing lines (82, 84) open into inlet channels of the pneumatic unit (86); and in that the pneumatic unit (86) has an outlet channel which is connected to the pneumatic actuation element (40).

10. Lubrication oil control arrangement according to Claim 9, characterised in that the pneumatic unit (86) constitutes a pneumatic OR gate, in which case the inlet channels inside the pneumatic unit (86) are connected to form a common outlet channel; and in that a restriction point (88, 90) is contained in each inlet channel of the pneumatic unit (86).

## Revendications

1. Dispositif de commande de dosage pour huile de lubrification, permettant d'envoyer de l'huile de lubrification dans la chambre de travail (18) d'au moins un moteur à piston rotatif (10) qui comprend un canal d'admission (20) sans volet d'étranglement pour l'alimentation de la chambre de travail (18) en air d'admission, un conduit d'échappement (26) pour l'évacuation des gaz d'échappement hors de la chambre de travail (18) et un turbocompresseur de suralimentation (24) entraîné par les gaz d'échappement et envoyant, par sa sortie (22), de l'air comprimé au canal d'admission (20), ce dispositif comprenant des moyens d'alimentation en huile (30) qui sont commandés par un organe pneumatique d'actionnement (40), cet organe pneumatique d'actionnement (40) communiquant avec la sortie (22) du turbocompresseur de suralimentation (24) et étant commandé par la pression de l'air comprimé de façon telle que la quantité d'huile de lubrification envoyée à la chambre de travail (18) croît lorsque la pression d'air de suralimentation croît.

2. Dispositif de commande de dosage pour huile de lubrification, suivant la revendication 1, caractérisé en ce que l'organe pneumatique d'actionnement (40) comporte un boîtier (42) dans lequel est disposée une pièce (48) réagissant à la pression et délimitant une chambre de pression (44).

3. Dispositif de commande de dosage pour huile de lubrification, suivant la revendication 2, caractérisé en ce qu'une conduite de liaison (50) est prévue entre la sortie (22) du turbocompresseur de suralimentation (24) et la chambre de pression (44) de l'organe pneumatique d'actionnement (40).

4. Dispositif de commande de dosage pour huile de lubrification, suivant la revendication 2 ou 3, caractérisé en ce que la pièce réagissant à la pression (48) est reliée à un élément du type ressort (49) qui s'oppose à la pression régnant dans la chambre de pression (44).

5. Dispositif de commande de dosage pour huile de lubrification, suivant l'une des revendications 2 à 4, caractérisé en ce que la pièce réagissant à la pression (48) est reliée à un élément de commande (32) des moyens d'alimentation en huile, notamment d'une pompe de dosage d'huile (30), par l'intermédiaire d'un organe de liaison (52).

6. Dispositif de commande de dosage pour huile de lubrification, suivant la revendication 5, caractérisé en ce que l'organe de liaison (52) comporte des moyens permettant de régler l'accouplement entre cet organe de liaison (52) et l'élément de commande (32).

7. Dispositif de commande de dosage pour huile de lubrification, suivant la revendication 5 ou 6, caractérisé en ce que l'organe de liaison comporte une tige (52) présentant une extrémité filetée (62) qui reçoit un manchon (60) immobilisé par un écrou (64, 66) sur chacun de ses deux côtés et en ce que ce manchon (60) est relié à l'élément de commande (32) de la pompe de dosage d'huile (30).

8. Dispositif de commande de dosage pour huile de lubrification, suivant l'une des revendications 2 à 7, caractérisé en ce que la pièce réagissant à la pression est une membrane (48).

9. Dispositif de commande de dosage pour huile de lubrification, suivant l'une des revendications 1 à 8, caractérisé en ce que plusieurs moteurs à piston rotatif (10, 10′), à chacun desquels est associé un turbocompresseur de suralimentation (24,24′), sont réunis de façon à constituer une unité motrice, tandis qu'il est prévu, partant de chaque sortie (22) de chaque turbocompresseur de suralimentation (24,24′), une tuyauterie de détection (82, 84) conduisant à une unité pneumatique (86), en ce que les tuyauteries de détection (82, 84) débouchent dans des conduits d'entrée de l'unité pneumatique (86) et en ce que l'unité pneumatique (86) comprend un conduit de sortie qui communique avec l'organe pneumatique d'actionnement (40).

10. Circuit de commande de dosage pour huile de lubrification, suivant la revendication 9, caractérisé en ce que l'unité pneumatique (86) constitue une porte pneumatique OU,les conduits d'entrée communiquant à l'intérieur de cette unité pneumatique (86) avec un conduit commun de sortie, et en ce que chaque conduit d'entrée de l'unité pneumatique (86) comporte un emplacement de restriction (88, 90).
